# EUROPÄISCHE PATENTSCHRIFT

(11) **EP 2 732 603 B1**
(45) Veröffentlichungstag und Bekanntmachung des Hinweises auf die Patenterteilung: **16.06.2021**
(21) Anmeldenummer: 12733066.0
(22) Anmeldetag: 29.06.2012
(51) Int. Cl.: H04L 29/08, B60R 21/013, B60W 50/00

(54) **VERFAHREN UND KOMMUNIKATIONSSYSTEM ZUM EMPFANG VON DATEN BEI DER DRAHTLOSEN FAHRZEUG-ZU-UMGEBUNG-KOMMUNIKATION**
METHOD AND COMMUNICATION SYSTEM FOR DATA RECEPTION IN WIRELESS VEHICLE-TO-SURROUNDINGS COMMUNICATION
PROCÉDÉ ET SYSTÈME DE COMMUNICATION POUR LA RÉCEPTION DE DONNÉES LORS D'UNE COMMUNICATION SANS FIL VÉHICULE À ENVIRONNEMENT

(30) Priorität: 12.07.2011 DE 102011107111
(43) Veröffentlichungstag der Anmeldung: 21.05.2014
(73) Patentinhaber: Continental Automotive GmbH, 30165 Hannover (DE)
(72) Erfinder: STÄHLIN, Ulrich, 65760 Eschborn (DE); MENZEL, Marc, 35096 Weimar (Lahn) (DE); SCHERPING, Richard, 65835 Liederbach (DE)
(74) Vertreter: Continental Corporation
(86) Internationale Anmeldenummer: PCT/EP2012/062682
(87) Internationale Veröffentlichungsnummer: WO 2013/007536

(56) Entgegenhaltungen:
- WO-A1-2006/015747
- WO-A1-2010/130737
- DE-A1-102010 002 092
- US-A1- 2003 139 881
- None

## Beschreibung

Die Erfindung betrifft ein Verfahren zum Empfang von Daten bei der drahtlosen Fahrzeug-zu-Umgebung-Kommunikation (C2X), insbesondere der mobilen Fahrzeug-zu-Umgebung-Kommunikation oder der Fahrzeug-zu-Fahrzeug-Kommunikation (C2C) als Spezialfall der C2X-Kommunikation, in einem Kommunikationssystem eines Fahrzeugs mit mehreren Steuergeräten, bei dem ein Empfangssteuergerät Daten von Objekten aus der Umgebung des Fahrzeugs empfängt und bei dem während des Empfangs der Daten in mindestens einem Steuergerät, vorzugsweise aber mehreren Steuergeräten, des Fahrzeugs ein Kommunikationsstapel abgearbeitet wird, sowie ein entsprechend eingerichtetes Kommunikationssystem des Fahrzeugs.

Ein solches Fahrzeug-Kommunikationssystem besteht meist aus mehreren Steuergeräten, die verschiedene Funktionen erfüllen. In dem Fahrzeug werden die physikalisch durch eine oder mehrere Antennen mit einem oder mehreren zugeordneten Empfängern (bzw. kombinierten Sendern und Empfängern) empfangenen Daten durch das eine Steuergerät oder die mehreren Steuergeräte des Kommunikationssystems weiterverarbeitet. Typischer Weise wird eines der Steuergeräte, welches im Rahmen dieser Anmeldung auch als Empfangssteuergerät bezeichnet wird, den Sende- und Empfangsteil sowie Teile des abzuarbeitenden Kommunikationsstapels enthalten, der nachfolgend noch etwas näher erläutert wird. Dann ist meist mindestens ein Steuergerät für die eigentliche Anwendung, beispielsweise eine Fahrerassistenzfunktion, vorgesehen. Weitere Teile des Kommunikationsstapels, beispielsweise mit dem Facility-Layer, können sich auch in noch weiteren, anderen Steuergeräten des Fahrzeugs befinden.

Der Empfangsprozess und die dabei abgearbeiteten Aufgaben der Steuergeräte werden durch den sogenannten Kommunikationsstapel gesteuert. Der C2X-Kommunikationsstapel, bzw. das zugehörige C2X-Kommunikationsprotokoll, beschreibt in Anlehnung an das OSI-Modell die Aufgaben, die im Rahmen der mobilen C2X-Kommunikation abgearbeitet werden. Dieser Kommunikationsstapel ist in Europa durch eine Industriekooperation des C2C-Communication Consortiums (C2C-CC) beziehungsweise die ETSI und/oder die CEN weitgehend standardisiert. In den USA wird die Standardisierung durch z. B. IEEE, SAE, etc. durchgeführt. Bei den durch den Kommunikationsstapel zu erledigenden Aufgaben kann es sich insbesondere um den (physikalischen) Datenempfang, das Routing der Daten, das Verarbeiten der Daten zwischen Empfang und Anwendung oder das Bereitstellen von Daten im Fahrzeug handeln. Diese Aufgaben werden entsprechend der Vorgabe in verschiedenen Schichten des OSI-Modells übernommen.

Im Rahmen der C2X-Kommunikation werden Daten zwischen dem Fahrzeug (C) und Objekten in seiner Umgebung (X) ausgetauscht. Bei den Objekten in der Umgebung kann es sich um fest installierte Sendeinheiten am Straßenrand, sogenannte Road Side Units (RSU), andere am Verkehr teilnehmende oder ruhende Fahrzeuge oder auch mit entsprechenden Sendern und/oder Empfängern ausgestatte Fußgänger handeln. Die ausgetauschten Daten erfüllen verschiedene Funktionen, beispielsweise eine Schutz-, Warn- und/oder Informationsfunktion, und können auch durch Fahrerassistenzsystem verwendet werden.

Bei der C2X-Kommunikation kann es je nach Verkehrsdichte bzw. Dichte von an der C2X-Kommunikation teilnehmenden Sendern zum Austausch großer Datenmengen kommen, so dass die für die Kommunikation in dem physikalischen Funkband zur Verfügung stehende Bandbreite stark belastet wird. Es ist bekannt, dass die Bandbreite ein limitierender Faktor beim Senden und/oder Empfangen von Daten ist. Das Ausschöpfen der Bandbreite kann zu Zeitverzögerungen bis hin zu einem Zusammenbruch des Kommunikations-Netzwerkes führen. Bei den sicherheitsrelevanten Anwendungen der mobilen C2X-Kommunikation kann der Datenaustausch jedoch extrem zeitkritisch sein, da sich die Verkehrssituation eines bewegten Fahrzeuges gegebenenfalls schnell ändert und vor einer Gefahrensituation noch rechtzeitig gewarnt werden soll. Gleichzeitig ändert sich häufig auch die Gefahrensituation selbst. Daher ist es für das Kommunikationssystem eines Fahrzeugs notwendig, die im Rahmen der C2X-Kommunikation ausgetauschten Informationen schnell zu erfassen und weiter zu verarbeiten. Ein Hauptproblem stellt dabei die Menge der Informationen dar.

Aus der US 2003/0139881 A1 ist ein Verfahren zum Betreiben eines Kollisionserfassungssystems für ein Fahrzeug mittels C2X-Kommunikation bekannt, das nach einer ersten Prüfung nur die Kommunikation mit bestimmten Objekten erlaubt. Dazu stellt ein Kollisionserfassungssystem die Nähe bzw. den Abstand des eigenen zu dem anderen, als möglicher Kommunikationspartner dienenden Fahrzeug fest. Befinden sich die Fahrzeuge in ihrem gegenseitigen Sichtfeld (Field-of-view), so wird ein Schlüssel ausgetauscht und die Kommunikation gestartet. Dies führt dazu, dass nur solche Fahrzeuge miteinander kommunizieren, die potentiell eine Gefahr füreinander darstellen könnten. Dadurch wird die Datenmenge im Vergleich zu einer Kommunikationslösung reduziert, bei der alle Fahrzeuge in einem vorgegebenen Umkreis miteinander kommunizieren würden. Nachteilig ist jedoch, dass durch die Überprüfung einer Gefährdungssituation und den sich anschließenden Schlüsselaustausch die Kommunikation komplexer wird und die Kommunikationsaufnahme länger dauert. Im Falle einer kritischen Situation kann dies zu problematischen Verzögerungen führen. Auch diese Art Kommunikationsaufnahme führt zu einer Erhöhung der ausgetauschten Datenmenge, gerade auch in zeitkritischen Gefahrensituationen. Dies hebt den beschriebenen Vorteil bei der Auswahl der Informationen teilweise wieder auf und kann seinerseits zu Zeitverzögerungen führen.

Aus der WO 2006/015747 A1 ist ein Schutzsystem bekannt, mit dem die für die Sicherheit des Kraftfahrzeugs relevanten Merkmale aus der Vielzahl an Eingangsgrößen der Sicherheitssensorik herausgefiltert werden. Das Schutzsystem des Kraftfahrzeuges wirkt präventiv, indem die Sicherheitssensorik in Abhängigkeit von vorher ausgewählten Merkmalen angesteuert wird. Es wird beispielsweise vorgeschlagen, einen Frontalaufprall anzeigenden Merkmalen eine spezifische Gewichtung bezüglich der Kritikalität zuzuordnen. Demnach beschreibt dieses System eine spezifische Filterung für eine bestimmte Gefahrensituation. Es wird dabei aber nicht unterschieden, ob von einem detektierten Objekt überhaupt eine Gefahr ausgehen könnte oder nicht. Außerdem müssen die Merkmale im Vorhinein festgelegt werden, so dass dieser Fall auf eine komplexe und variable C2X-Kommunikation mit vielen verschiedenen Teilnehmern nicht sinnvoll anwendbar ist.

In der mobilen C2X-Kommunikation können extrem große Datenmengen entstehen, die schnell und vollständig bearbeitet werden müssen, da sie sonst wertlos werden. Erschwerend kommt hinzu, dass nicht jedes Steuergerät des Kommunikationssystems alle Daten verarbeiten kann. Insbesondere dürfen sicherheitsrelevante Daten nur durch Steuergeräte bearbeitet werden, die eine geringe Ausfallwahrscheinlichkeit aufweisen. Die Ausfallwahrscheinlichkeit wird dabei durch den sogenannten ASI-Level angegeben, der in der ISO 26262 näher bestimmt wird.

Der Erfindung liegt die Aufgabe zugrunde, eine Möglichkeit vorzuschlagen, die empfangenen Daten zügig und effektiv zu erfassen.

Diese Aufgabe wird erfindungsgemäß mit einem Verfahren gemäß Anspruch 1 und einem entsprechend eingerichteten Kommunikationssystem gemäß Anspruch 11 gelöst.

Dazu wird vorgeschlagen, die in dem Fahrzeug empfangenen Daten in zumindest zwei verschiedene Relevanzklassen einzusortieren und abhängig von der Relevanzklasse in dem Kommunikationsstapel weiter zu verarbeiten. Die Abhängigkeit kann insbesondere darin bestehen, dass Daten aus verschiedenen Relevanzklassen unterschiedlich weiterverarbeitet werden. Hierdurch wird die potenziell große Menge der empfangen Daten vorverarbeitet, so dass nicht alle Elemente der Abarbeitungskette in dem Kommunikationsstapel mit unnötigen, d. h. nicht relevanten Daten, belastet werden.

Da in beliebigen Steuergeräten nicht jede Art der Bearbeitung von Daten erlaubt ist, weil beispielsweise bestimmte sicherheitsrelevante Daten nur in Steuergeräten mit dem entsprechenden Sicherheitslevel verarbeitet werden dürfen, ist erfindungsgemäß vorgesehen, die vorgeschlagene Vorverarbeitung insbesondere auch auf verschiedene Steuergeräte zu verteilen, wobei zwischen den verschiedenen Schritten der Vorverarbeitung auch weitere Teile des Kommunikationsstapels, vorzugsweise des üblichen Kommunikationsstapels ohne die erfindungsgemäße Vorverarbeitung, abgearbeitet werden können. Die Prüfung auf Relevanz der von anderen Objekten empfangenen Daten kann dabei grundsätzlich in jedem Steuergerät vorgenommen werden. Die Einsortierung in Relevanzklassen entscheidet dann darüber, ob diese Daten überhaupt bzw. auf welche Weise diese Daten weiterverarbeitet werden.

Daher ist es erfindungsgemäß bevorzugt, die Einsortierung der Daten direkt in dem für den Empfang ausgebildeten Steuergerät vorzunehmen, wobei dieses Empfangssteuergerät zugleich auch für das Senden von Daten ausgebildet sein kann und üblicher Weise auch ist. Aufgrund der unmittelbar in dem Empfangssteuergerät stattfindenden Relevanzprüfung kann diese besonders umfassend und schnell erfolgen, weil durch das Empfangssteuergerät alle Daten aus der Umgebung empfangen werden und das Einsortieren der Daten in Relevanzklassen vorzugsweise ausschließlich anhand der empfangenen Daten vorgenommen wird. So kommt es zu keiner Verzögerung durch eine komplexe Kommunikation zwischen dem Fahrzeug und seiner Umgebung oder durch eine aufwendige Auswertung der Daten. Die erfindungsgemäße Lösung erfordert insbesondere kein mehrmaliges Senden und Empfangen zwischen dem Objekt und dem Fahrzeug beispielsweise zum Austausch eines Sicherheitsschlüssels.

Das direkte Einsortieren der empfangenden Daten in Relevanzklassen durch das Empfangssteuergerät erlaubt es, die zur Verfügung stehenden Ressourcen effektiv zu nutzen, da es im Anschluss bereits möglich, ist die Relevanzklassen in dem Kommunikationsstapel und gegebenenfalls mehreren sich anschließenden Steuergeräten verschiedenartig zu bearbeiten. So kann beispielsweise durch die Relevanzklasse bestimmt werden, an welche Anwendung die Daten weiter gesandt werden sollen, so dass die Datenbearbeitung erfindungsgemäß auch auf verschiedene Steuergeräte aufgeteilt werden kann. Die Weiterverarbeitung der Daten kann erfindungsgemäß also auf unterschiedlichen Steuergeräten stattfinden, wobei gegebenenfalls dieselben Daten auch auf unterschiedlichen Steuergeräten weiterverarbeitet werden können. Außerdem ist es möglich, die Daten je nach Relevanzklasse in unterschiedliche Anwendungen einzusortieren.

Ebenfalls ist es so möglich Daten auszusortieren und damit zu verhindern, dass nachfolgende Teile des Kommunikationsstapels mit unnötigen Daten belastet werden. Denn auch durch das Aussortieren nicht relevanter Daten kann die Bearbeitungszeit für relevante Daten signifikant reduziert werden.

In einer besonders einfachen Ausführungsform können lediglich zwei Relevanzklassen, nämlich relevant und nicht-relevant, vorgesehen werden, wobei nur die in die Relevanzklasse "relevant" einsortierten Daten weiterverarbeitet und die anderen empfangen Daten verworfen werden.

Gemäß einer Ausführungsform der Erfindung kann als Kriterium für die Einteilung in die Relevanzklasse der Abstand bzw. die Entfernung zwischen dem Objekt und dem Fahrzeug gewählt werden. Dies ist beispielsweise deshalb einfach möglich, weil die in der C2X-Kommunikation ausgetauschten Datentelegramme eine Positionsangabe des Senders enthalten, beispielsweise in den Koordinaten eines vordefinierten Koordinatensystems wie eines satellitenbasierten Ortungssystems. Diese Informationen stehen daher unmittelbar nach dem Empfang des Datentelegramms zur Verfügung. Häufig sind die Orts- bzw. Positionsinformationen des eigenen Fahrzeugs auch in dem Empfänger bzw. dem diesem unmittelbar zugeordneten Steuergerät (Empfangssteuergerät) vorhanden, weil dieses Empfangssteuergerät beispielsweise auch die Satelliten-Datentelegramme eines satellitenbasierten Ortungssystems auswertet, und/oder weil dieses dem Empfänger und Sender des Fahrzeugs zugeordnete Empfangs- (bzw. auch Sende-)Steuergerät die durch das Fahrzeug ausgesendeten Datentelegramme der C2X-Kommunikation mit den Positionsinformationen versieht, die ihr durch gegebenenfalls auch andere Steuergeräte zeitaktuell und kontinuierlich zur Verfügung gestellt werden. Aus diesen in demselben Koordinatensystem vorliegenden Positionsinformationen kann der Abstand der Objekte zueinander einfach und schnell abgeleitet werden, wobei der Abstand einfacher Weise die Luftlinie zwischen den Objekten darstellen. Straßen- oder Richtungsinformationen müssen hierbei jedoch (noch) nicht berücksichtigt werden, auch wenn dies grundsätzlich insbesondere für das eigene Fahrzeug bereits möglich wäre.

In einer weiteren Ausführungsform kann erfindungsgemäß vorgesehen sein, dass das Einsortieren in die Relevanzklassen alternativ oder zusätzlich anhand einer Kollisionszeit erfolgt, die den in dem Fahrzeug empfangenen Daten in dem Empfangssteuergerät zugeordnet wird. Zur Bestimmung der Kollisionszeit, die auch als "time-to-collision" oder kurz TTC bezeichnet wird, können einfacher Weise der Abstand (beispielsweise bezogen auf die Luftlinie oder die tatsächliche momentane Bewegungsrichtung) und die Relativgeschwindigkeit zwischen dem Objekt und dem Fahrzeug herangezogen werden. Die Relativgeschwindigkeit gibt dabei an, wie schnell sich das Objekt, von dem die Daten erstmalig gesendet werden, relativ zu dem Empfänger der Daten bewegt. Alternativ wäre es auch möglich, ausgehend von dem Ort und der Geschwindigkeit des eigenen Fahrzeugs und des Objekts jeweils Kollisionsbereiche zu definieren, die deren maximale Reichweite in einer vorgegebene Kollisionszeit abgeben. Kommt es zu Überschneidungen dieser Kollisionsbereiche, wird die Kollisionszeit unterschritten.

In einer Weiterentwicklung des erfindungsgemäßen Verfahrens ist es möglich, das Einsortieren der empfangenen Daten von Objekten anhand der Überdeckung mit dem Empfangsbereich eines oder mehrerer Umfeldsensoren des Fahrzeugs vorzunehmen. So kann es beispielsweise sinnvoll sein, derartige Daten in eine Relevanzklasse einzuteilen, die eine fahrdynamische Prädiktion der Daten erlaubt, um die Auswertung durch den Umfeldsensor zu unterschützen und/oder zu beschleunigen.

Gemäß einem weiteren Aspekt der vorliegenden Erfindung kann vorgesehen sein, einer Relevanzklasse eine Priorität zuzuordnen. Vorzugsweise kann verschiedenen Relevanzklassen eine unterschiedliche Priorität zugeordnet werden. Es ist auch möglich, Daten bzw. den zugehörigen Objekten in einer Relevanzklasse im Sinne einer Aufteilung nach Wichtigkeit der Daten verschiedene Prioritäten zuzuordnen, um auch innerhalb einer Relevanzklasse die empfangenen Daten entsprechend ihrer Wichtigkeit zu sortieren. Vorteilhafterweise wird Daten mit einer kurzen Kollisionszeit, d. h. einer möglichen potentiellen Kollision in kurzer Zeit relativ zu dem aktuellen Zeitpunkt, eine hohe Priorität zugeordnet. Bei der weiteren Bearbeitung der Daten im Kommunikationsstapel oder durch einzelne Steuergeräte werden diese Daten mit hoher Priorität dann bevorzugt behandelt, wobei vorzugsweise den Daten aus verschiedenen Relevanzklassen auch unterschiedliche Prioritäten zugeordnet sein können. Die Daten mit geringerer Priorität werden nicht vernachlässigt oder verworfen, sondern im Vergleich zu Daten mit höherer Priorität nur verzögert und/oder auf anderen Wegen im Kommunikationsstapel und/oder in anderen Steuergeräten abgearbeitet. Ein weiterer wichtiger Vorteil der Priorisierung besteht darin, dass die Bearbeitung von Relevanzklassen und/oder Daten mit der höchsten Priorität so gesteuert werden kann, dass diese nur in Steuergeräten mit einem entsprechenden ASI-Level erfolgen.

Gemäß einer sinnvollen Weiterbildung der Erfindung kann in dem Verfahren vorgesehen werden, dass die Qualität der empfangen Daten durch die Daten eines anderen Objekts oder eines Sensors verbessert werden. Hierzu kann vorzugsweise in einem nächsten, dem Empfangssteuergerät nachgeschalteten Steuergerät eine Validierung der empfangenen oder daraus abgeleiteten Daten, insbesondere anhand zusätzlicher Fahrzeugdaten, erfolgen. Dadurch kann ein Ausfiltern ungültiger Daten und ein Erhöhen der Zuverlässigkeit der verbliebenen Daten erreicht werden. Zur Durchführung kann das Steuergerät oder können gegebenenfalls mehrere verschiedene Steuergeräte sowohl die aus der Umgebung in der C2X-Kommunikation empfangenen Daten als auch Daten von Fahrzeugsensoren sammeln und verarbeiten. Dabei kann auch eine Sensordatenfusion durchgeführt werden. Bei einer Sensordatenfusion werden Daten, die von unterschiedlichen Sensoren empfangen werden, miteinander verknüpft, um die Qualität der Daten bzw. Informationen durch Bezug auf unterschiedliche Daten- und Sensorquellen zu verbessern. Insbesondere ist dies vorteilhaft, wenn die Sensoren verschiedene Arbeitsweisen aufweisen, weil diese Sensoren dann üblicher Weise unterschiedliche systematische Fehler aufweisen, und der Gesamtfehler durch eine Kombination der verschiedenen Sensordaten dann verbessert wird. Unter Qualität der Daten wird insbesondere die Zuverlässigkeit, Genauigkeit und/oder Dichte der Daten verstanden. So ist es unter anderem möglich, eine präzisere Entfernungsmessung zu erhalten, wenn beispielsweise eine Datenfusion zwischen den Ortsinformationen aus Daten der C2X-Kommunikation und aus Daten eines Radarsensors als in dem Fahrzeug befindlichem Umfeldsensor stattfindet. Im Rahmen der Sensordatenfusion können verschiedene Sensoren des Fahrzeuges oder daraus bereits abgeleitete Daten genutzt werden. Vorteilhaft sind hierbei insbesondere Daten, die durch andere Fahrzeug-Steuergeräte als Informationen in dem Fahrzeugkommunikationssystem, vorzugsweise einem Bussystem, abrufbar sind, weil diese einfach durch jedes Steuergerät bei einem Schritt der erfindungsgemäßen schrittweisen Vorverarbeitung der empfangenen Daten abgegriffen werden können.

Erfindungsgemäß ist es ebenfalls möglich, in einem bestimmten Schritt der erfindungsgemäßen Vorverarbeitung eine fahrdynamische Prädiktion von Objekten durchzuführen, die an der C2X-Kommunikation teilnehmen, insbesondere also anderen Fahrzeugen. Bei einer fahrdynamischen Prädiktion handelt es sich um die Vorhersage der zukünftigen Daten eines Objektes, insbesondere relativ zu dem eigenen (empfangenden) Fahrzeug. Ein wichtiger Teilaspekt davon ist die Ermittlung der zukünftigen Positionsdaten eines Objektes. Dazu ist vorgesehen, die Geschwindigkeit und/oder Position eines Fahrzeuges durch die mobile C2X-Kommunikation und/oder im Rahmen einer Sensordatenfusion zu erfassen und anschließend zu extrapolieren. Im Allgemeinen werden dabei Sensordaten des Fahrzeugs und Daten aus der mobilen C2X-Kommunikation genutzt, um bestehende Daten in die Zukunft fortzuschreiben und so eine Verkehrssituation zu antizipieren.

In Weiterentwicklung dieses erfindungsgemäßen Gedankens kann aus den zu dem Objekt vorliegenden Daten eine Trajektorie des Objektes ermittelt und diese Trajektorie extrapoliert werden, wobei die Extrapolation insbesondere auf den in der C2X-Kommunikation empfangenen Daten, gegebenenfalls unter Einbeziehung anderer Sensordaten, basiert. Dadurch wird eine Aussage über eine zukünftige Verkehrssituation möglich. Für den Fall, dass ausreichend Zeit und/oder Ressourcen, insbesondere Rechenzeit in einem Steuergerät, zur Verfügung stehen, wird bevorzugt eine Extrapolation anhand einer Karte und der zu erwartenden Route bestimmt. Hierdurch können dann die Abstandsinformationen auch durch an die Karte angepasste Entfernungsinformationen qualitativ verbessert werden.

Im Straßenverkehr befinden sich Fahrzeuge häufig in vergleichbaren Situationen. So fahren Fahrzeuge beispielsweise auf Autobahnen üblicher Weise auf den Fahrspuren mit unterschiedlicher Geschwindigkeit neben- und hintereinander her, wobei größere Geschwindigkeitsunterschiede üblicher Weise nur auf den Überholspuren auftreten, wenn die Verkehrsdichte nicht zu groß ist. Bei höherer Verkehrsdichte kommt es häufig zu einer Kolonnenbildung mit einer Kolonnengeschwindigkeit, insbesondere bei Stau oder zähfließendem Verkehr. Auch durch Witterungseinflüsse oder Geschwindigkeitsbeschränkungen kann es zu niedrigeren Geschwindigkeiten im Verkehr kommen, als dies baulich möglich wäre, und damit zu einer Kolonnenbildung. Ähnliches gilt in einer Baustelle. Auch bei Auffahrten und Abfahrten, Abspaltungen oder Zusammenführungen, Reduktion oder Expansion auf Autobahnen zeigt eine Gruppe von hintereinander fahrenden Fahrzeugen meist ein ähnliches Bewegungsmuster. Ebenso ist es möglich, dass die Fahrzeuge sich an einer bekannten ausgezeichneten Verkehrsstelle befinden, wie einer Abzweigung, einer Kreuzung, einem Bahnübergang oder einer Ampel, auf einer Landstraße oder im städtischen Verkehr.

In solchen Situationen sind die Objekte durch homogene Daten gekennzeichnet, d. h. die Daten der verschiedenen Objekte sind ähnlich oder gleich. Daher zeichnen sich diese Daten durch eine geringe Varianz um ihren Durchschnitt aus, und ein einzelnes Objekt kann die Eigenschaft einer solchen Gruppe von Objekten bereits gut beschreiben. In einem solchen Fall kann erfindungsgemäß vorgesehen werden, die Daten von Objekten, insbesondere Objekten innerhalb einer Relevanzklasse, zu Gruppen zusammenzufassen. Alle Objekte in einer solchen Gruppe ähneln sich also in ihrem Verkehrsverhalten, so dass die Daten dieser Gruppe von Fahrzeugen zusammengefasst werden können. Dies erfolgt vorzugsweise nicht in dem Empfangssteuergerät, sondern in einem nachgeschalteten Steuergerät. Dann ist diese Verfahrensvariante besonders ressourcenschonend. Es erfolgt also erfindungsgemäß eine Reduktion der Datenmenge, indem die verschiedenen Objekte zu einer Gruppe bzw. einem in der Datenverarbeitung abzuarbeitenden Ereignis zusammengefasst werden.

Dabei können als wichtige Gruppenparameter beispielsweise eine Kolonnengeschwindigkeit sowie die Länge und der Ort der Gruppe übermittelt werden. Die Länge bzw. Ausdehnung der Gruppe kann beispielsweise als Gesamtmenge der Positionen der einzelnen Objekte oder als deren Mittel- bzw. Schwerpunkt ermittelt werden. Die Kolonnengeschwindigkeit kann vorzugsweise auch als Mittelwert der Geschwindigkeiten der in der Gruppe zusammengefassten Objekte gebildet werden. Zusätzlich kann auch das zu dem eigenen Fahrzeug nächstkommende Objekt als Einzelobjekt übermittelt werden, welches dann beispielsweise auch einer fahrdynamischen Prädiktion zugänglich wäre. Anstelle der vorerwähnten Gruppenparameter können als Gruppenparameter auch die Parameter dieses nächstkommenden Objekts aus der Gruppe verwendet werden. In diesem Fall könnte die Gruppe also einfacher Weise durch das Objekt der Gruppe mit der niedrigsten Kollisionszeit und/oder dem geringsten Abstand zu dem eigenen Fahrzeug repräsentiert werden.

Ferner ist es möglich, die Vorverarbeitung noch weiter aufzuteilen und dabei gegebenenfalls auf weitere Steuergeräte zu verteilen, um weitere Elemente wie eine Datenfilterung, eine erste Situationsbewertung oder dergleichen zu erreichen.

Auch wenn erfindungsgemäß grundsätzlich eine andere Anzahl von Relevanzklassen möglich ist, hat es sich als besonders vorteilhaft erwiesen, die empfangenen Daten in drei Relevanzklassen einzuteilen, wobei die Einteilung je nach den gewählten Kriterien bereits in dem ersten Empfangssteuergerät oder schrittweise in verschiedenen Empfangssteuergeräten erfolgen kann. Hierdurch lässt sich eine klare Strukturierung und Zuweisung unterschiedlicher Verarbeitungsschritte für die häufig sehr breite Spanne an möglichen empfangenen Daten von verschiedenen Objekten erreichen.

Dabei kann eine erste Klasse mit dem höchsten möglichen Relevanzgrad, eine dritte Klasse mit dem niedrigsten möglichen Relevanzgrad und eine zweite Klasse mit einem mittleren möglichen Relevanzgrad gebildet werden. Erfindungsgemäß ist die Einteilung von Relevanzklassen nicht auf drei beschränkt. Dann wird die zweite Klasse mit einem mittleren möglichen Relevanzgrad erfindungsgemäß weiter aufgefächert, wobei gegebenenfalls auch die Grenzen zu der ersten und der dritten Klasse verschoben werden können. Die nachfolgende Erläuterung gilt daher nicht nur für die konkret beschrieben drei Relevanzklassen, sondern erfindungsgemäß auch für mehr Relevanzklassen, wobei die für die erste und die dritte Klasse beschriebenen Merkmale jeweils für die Relevanzklasse mit höchsten bzw. niedrigsten möglichen Relevanzgrad gelten. Die Kriterien für die Einstufung bzw. das Einsortieren in die verschiedenen Relevanzklassen werden in dem Fall von mehr als drei Stufen geeignet angepasst. Ein erfindungsgemäß besonders geeignetes Kriterium für die Einteilung in Relevanzklassen ist die Kollisionszeit, die gegebenenfalls in Verbindung mit weiteren Kriterien für das Einsortieren in die verschiedenen Relevanzklassen herangezogen werden kann.

Die erste Klasse mit dem höchsten Relevanzgrad betrifft die unmittelbare Fahrzeugumgebung. Diese kann in einem konkreten Beispiel für die Anwendung des erfindungsgemäßen Verfahrens durch den Abstand zwischen dem eigenen Fahrzeug und dem Objekt bestimmt werden, von dem die empfangenen Daten in der C2X-Kommunikation ausgesandt wurden. Der wie vorbeschrieben als Luftlinie zwischen dem eigenen Fahrzeug und dem Objekt liegende Abstand gibt also einen Radius um das eigene Fahrzeug vor, innerhalb dessen Informationen aus der C2X-Kommunikation bei der Vorverarbeitung immer als relevant eingestuft werden. Als weiteres Kriterium kann für empfangene Daten die Kollisionszeit mit herangezogen werden, welche den Abstand mit der Geschwindigkeit des Objekts und/oder der Relativgeschwindigkeit des Objekts zu dem eigenen Fahrzeug berücksichtigt. Ein sinnvoller Grenzwert für die erste Klasse kann beispielsweise bei einer Kollisionszeit von zwei Sekunden liegen. Bei der Vorverarbeitung werden für die Einstufung in die Klasse mit dem höchsten möglichen Relevanzgrad erfindungsgemäß insbesondere keine weiteren Daten und Informationen für das Einsortieren in diese Relevanzklasse herangezogen und insbesondere auch keine Annahmen über die Straße, die Route des Objekts auf der Straße oder das Fahrerverhalten gemacht, um die Bearbeitung dieser unter Umständen zeitkritischen Daten durch die erfindungsgemäße Vorverarbeitung nicht zu verzögern. Gegebenenfalls kann erfindungsgemäß sogar vorgesehen werden, diese Daten direkt weiter zu verarbeiten und in der Abarbeitung des Kommunikationsstapels entsprechend ihrer hohen Priorität, die den Daten dieser ersten Relevanzklasse zugewiesen wird, zu bevorzugen. Technisch kann dies beispielsweise durch einen Interrupt erzeugt werden, welcher bei Vorliegen der entsprechenden Daten in der ersten Relevanzklasse die normale (serielle) Abarbeitung des Kommunikationsstapels unterbricht und diese Daten aus der ersten Relevanzklasse, d. h. mit der entsprechend höchsten Priorität, in die Abarbeitung des Kommunikationsstapels einfügt bzw. den Sicherheits-Steuereinrichtungen zuleitet.

Die zweite Klasse mit mittlerem Relevanzgrad betrifft relevante Objekte, die in näherer Zukunft einen Einfluss auf das Fahrverhalten und die Sicherheit des eigenen Fahrzeugs haben können, ohne unmittelbar sicherheitsrelevant zu sein. Als Kriterien für die Einstufung in die zweite Klasse kann der Abstand zwischen dem Fahrzeug und dem die Daten sendenden Objekt herangezogen werden, wobei der Radius respektive Abstand des um das eigene Fahrzeug gebildeten Umkreises größer ist als im Fall einer Einsortierung in die erste Klasse. Hierdurch kann eine geringe Entfernung zwischen Fahrzeug und Objekt definiert werden, die jedoch die unmittelbare Fahrzeugumgebung übersteigt. Ferner kann als weiteres Kriterium für das Einsortieren in diese Relevanzklasse die Kollisionszeit herangezogen werden, die beispielsweise für diese Klasse bei bis zu fünf Sekunden liegen kann. Somit werden in diese zweite Relevanzklasse auch alle Objekte einsortiert, deren Kollisionszeit zu dem eigenen Fahrzeug zwischen zwei und fünf Sekunden liegt.

Ergänzend können auch die Objekte mit einsortiert werden, die noch im Erfassungsbereich der Umfeldsensorik, beispielsweise einem im Fahrzeug vorhandenen Radarsensor, liegen, sofern eine solche Umfeldsensorik im Fahrzeug vorhanden ist. Außerdem können aufgrund von Annahmen über die Straße (Autobahn, Einmündung, Landstraße, Straße in geschlossenen Ortschaften) und/oder von Annahmen zu dem Fahrverhalten des eigenen Fahrzeugs und/oder des Objekts Daten in diese zweite Relevanzklasse einsortiert werden. Diese ergänzend zu der zweiten Relevanzklasse hinzugezählten Objekte werden aber vorzugsweise nicht in dem ersten, d. h. dem Empfangssteuergerät, gebildet, sondern in einem nachfolgenden Steuergerät.

In die letzte, im beschriebenen Beispiel dritte Klasse mit dem niedrigsten möglichen Relevanzgrad werden weiter entfernte Objekte eingestuft. In diese Relevanzklasse mit der niedrigsten Priorität können alle Objekte eingestuft werden, die nicht in die anderen Relevanzklassen einsortiert werden. Die Daten dieser Objekte können im Rahmen der Vorverarbeitung, vorzugsweise jedoch in weiteren nachgeordneten Steuergeräten, deutlich intensiver ausgewertet und/oder zusammengefasst werden, um die fahrzeugeigenen Assistenzsysteme nicht durch eine Vielzahl von C2X-Botschaften zu überlasten. Insbesondere in dieser Relevanzklasse ist es sinnvoll, Daten verschiedener Objekte zu einer Gruppe zusammenzufassen. Ein Beispiel für derartig zusammengefasste Objekte kann beispielsweise eine Gruppeninformation mit den Parametern "4 Fahrzeuge an der Position XY, Gruppengeschwindigkeit 20 km/h, Stau" sein. Zu diesen Objekten werden dann vorzugsweise keine fahrdynamische Prädiktion und/oder Trajektorie ermittelt. Derartige Gruppendaten können aber gegebenenfalls mit einem Objekt aus der mittleren (zweiten) Relevanzklasse verbunden sein, das beispielsweise den dem eigenen Fahrzeug nächstkommenden Repräsentanten dieser Gruppe von Objekten darstellt, für den dann eine fahrdynamische Prädiktion oder Trajektorienermittlung möglich ist.

Eine Aufteilung der Daten in die verschiedenen Relevanzklassen ist dann besonders einfach möglich, wenn die Relevanzklassen jeweils einen Kollisionszeitraum abdecken. Dabei kann vorgesehen werden, dass die Kollisionszeiträume disjunkt sind. Alternativ können die Kollisionszeiträume im Grenzbereich zwischen zwei Relevanzklassen auch überlappen, so dass die Daten im Grenzbereich zwei Relevanzklassen angehören. Dies erlaubt eine Redundanz in der Datenverarbeitung und die unterschiedliche Abarbeitung der Daten in verschiedenen Auswertungen. In diesem Zusammenhang ist auch denkbar, dass eine Relevanzklasse die Daten einer anderen Relevanzklasse teilweise oder vollständig beinhaltet. Dadurch ist es möglich, dass schnell auf die Daten reagiert wird, etwa unter Umgehung einer fahrdynamischen Prädiktion, und die fahrdynamische Prädiktion parallel durch die Vorverarbeitung der anderen Relevanzklasse durchgeführt wird.

Ferner betrifft die Erfindung ein Kommunikationssystem zum Empfang von Daten in der drahtlosen Fahrzeug-zu-Umgebung-Kommunikation (C2X) zwischen einzelnen Kommunikationsteilnehmern, wobei das Kommunikationssystem in einem Fahrzeug vorgesehen ist und verschiedene Steuergeräte mit, vorzugsweise jeweils, einer Recheneinheit aufweist. Das Kommunikationssystem des Fahrzeugs ist gemäß den Merkmalen des Anspruchs 11 ausgebildet und insbesondere zur Teilnahme in der drahtlosen Fahrzeug-zu-Umgebung-Kommunikation (C2X) eingerichtet und kann daher insbesondere mit anderen an der C2X-Kommunikation teilnehmenden Fahrzeugen und stationären Teilnehmern der C2X-Kommunikation, sogenannten Road Side Units (RSU), kommunizieren. Ferner sind die Recheneinheiten in den Steuergeräten zur Durchführung des vorbeschriebenen Verfahrens oder Teilen davon eingerichtet.

Entsprechend bezieht sich die Erfindung auch auf ein Computerprogrammprodukt mit Programmcode-Mitteln, die auf einem computerlesbaren Datenträger gespeichert bzw. speicherbar sind, um das Verfahren nach einem der Ansprüche 1 bis 10 durchzuführen, wenn das Programmprodukt auf einer Recheneinheit installiert und ausgeführt wird.

Die vorliegende Erfindung schlägt zur schnelleren und effektiven Abarbeitung von im Rahmen der C2X-Kommunikation empfangenen Daten also vor, diese Daten einer Vorverarbeitung zu unterziehen, die insbesondere auf mehrere Steuergeräte aufgeteilt sein kann und die parallel zur Abarbeitung des üblichen Kommunikationsstapels, d. h. in diesen integriert bzw. mit diesem in Beziehung stehend, abläuft. Indem die Vorverarbeitung erfindungsgemäß auf mehrere Positionen innerhalb des Kommunikationsstapels verteilt ist, kann durch die Vorverarbeitung und insbesondere einzelne Schritte der Vorverarbeitung die Abarbeitung des Kommunikationsstapels beeinflusst werden, um eine große Menge an empfangenden Daten aus der C2X-Kommunikation schnell und zuverlässig abarbeiten zu können. Dazu ist erfindungsgemäß vorgesehen, die Daten zur Strukturierung und/oder die Daten sendenden Objekte bei der Vorverarbeitung in verschiedene Relevanzklassen einzuteilen. Dieses Einsortieren in Relevanzklassen ermöglicht auf einfache Weise, die Daten verschiedener Objekte unterschiedlich vorzubearbeiten und entsprechend ihrer Relevanzklasse in den Kommunikationsstapel einzubinden bzw. den entsprechenden Ziel-Steuergeräten zuzuleiten. Das vorteilhafter Weise vorgesehene Aufteilen auf mehrere Steuergeräte erlaubt es, kleinere und weniger leitungsfähige Steuergeräte zu verwenden, die auch nicht alle einem hohen Sicherheitsstandard (SIL-Level) genügen müssen.

Ein bevorzugtes Kriterium zum Einsortieren in Relevanzklassen, gegebenenfalls in Verbindung mit weiteren Kriterien, ist die Kollisionszeit, die in einfacher Weise den Abstand und die Geschwindigkeiten bzw. die Relativgeschwindigkeit zwischen dem eigenen Fahrzeug und dem Objekt zu einer möglichen Kollisionszeit verbindet. Diese Kollisionszeit eignet sich insbesondere für eine erste Klasseneinteilung. Ein weiteres Kriterium für die Entscheidung zum Einsortieren bzw. Aufteilen der Daten in verschiedene Klassen kann erfindungsgemäß auch der Empfangsbereich der Umfeldsensoren sein, da aus dem Empfangsbereich der Umfeldsensoren empfangene Daten erfindungsgemäß durch eine Sensorfusion qualitativ verbessert werden können. Je nach zugeordneter Relevanzklasse und/oder Priorität, die beispielsweise auch eine Sortierung der Daten respektive Objekte innerhalb der Relevanzklassen erlaubt, können die Objekte bzw. die Daten der Objekte auf verschiedene Anwendungen aufgeteilt werden. So ist es durch die Vorverarbeitung erfindungsgemäß bereits in einem frühen Empfangsstadium möglich, die verschiedenen Daten sinnvoll aufzuteilen und den geeigneten Anwendungen respektive den die Anwendungen ausführenden Steuergeräten zuzuleiten. Es ist auch möglich, weitere Schritte der Vorverarbeitung von der Einsortierung in Relevanzklassen in einem vorangegangenen Schritt der Vorverarbeitung abhängig zu machen.

Wenn genügend Zeit für die Aufarbeitung besteht, d. h. insbesondere für Daten von Objekten, die in eine niedrige oder die niedrigste Relevanzklasse einsortiert sind, ist es erfindungsgemäß auch möglich, mehrere Objekte zu einer Gruppe zusammenzufassen und mit Gruppendaten weiter zu verarbeiten. Durch das Konzentrieren und Zusammenfassen der einzelnen Daten zu Gruppendaten wird die Menge der zu verarbeitenden Daten in dem Fahrzeugsystem deutlich reduziert.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: schematisch ein Ablaufdiagramm mit dem Ablauf des erfindungsgemäßen Verfahrens zum Empfangen von Daten in der Fahrzeug-zu-Umgebung-Kommunikation in einem erfindungsgemäßen Fahrzeug-Kommunikationssystem gemäß einer ersten Ausführungsform;
- Fig. 2: eine Prinzipskizze einer beispielhaften Verkehrssituation an einer Kreuzung, die durch das erfindungsgemäße Verfahren erfasst und bearbeitet wird;
- Fig. 3: eine Prinzipskizze einer beispielhaften Verkehrssituation auf einer Autobahn, die durch das erfindungsgemäße Verfahren erfasst und bearbeitet wird;
- Fig. 4: schematisch ein Ablaufdiagramm mit dem Ablauf des erfindungsgemäßen Verfahrens zum Empfangen von Daten in der Fahrzeug-zu-Umgebung-Kommunikation gemäß einer zweiten Ausführungsform und
- Fig. 5: schematisch ein Ablaufdiagramm mit dem Ablauf des erfindungsgemäßen Verfahrens zum Empfangen von Daten in der Fahrzeug-zu-Umgebung-Kommunikation gemäß einer dritten Ausführungsform.

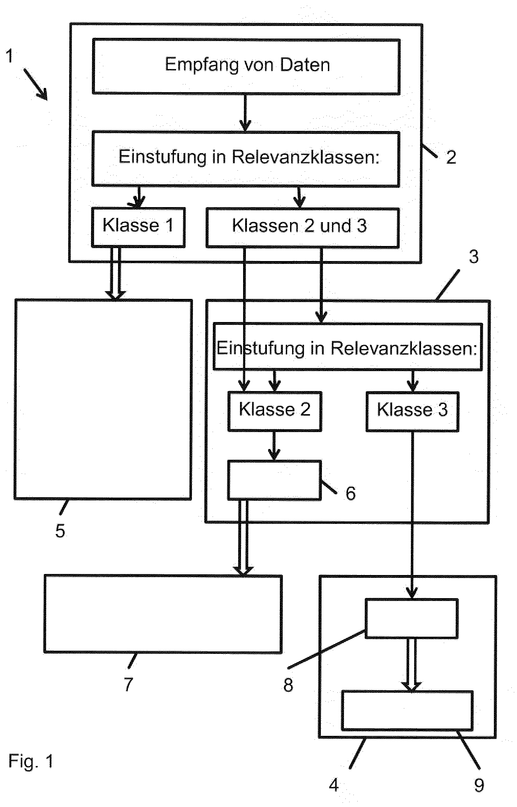

In Fig. 1 ist ein Kommunikationssystem 1 eines Fahrzeugs mit für die Erfindung wesentlichen Steuergeräten 2, 3 und 4 schematisch dargestellt. Das Steuergerät 2 stellt ein Empfangssteuergerät dar, an das die nicht dargestellte Antenne mit der Sende- und Empfangselektronik angeschlossen ist. In dem Empfangssteuergerät 2 werden grundsätzlich die empfangen Daten in die Kommunikationsstapelverarbeitung des Kommunikationssystems 1 eingebunden, welche den Prozess von dem physikalischen Dekodieren der durch die Antenne empfangenen Daten bis zur Aufbereitung und Übermittlung der Daten an einzelne Anwendungen in Anwendungsmodulen 5, 6, 7, 8 und/oder 9 entsprechend den Vorgaben des Kommunikationsprotokolls durchführt. Dieser Prozess der Kommunikationsstapelverarbeitung läuft erfindungsgemäß parallel in den Steuergeräten 2, 3, 4 und gegebenenfalls den Anwendungsmodulen 5, 6, 7, 8, 9 bzw. deren nicht dargestellten Recheneinheiten ab. Die Steuergeräte 2, 3, 4 und die Anwendungsmodule 5, 6, 7, 8, 9 können auch in einer Einheit mit einer gemeinsamen Recheneinheit vorgesehen sein.

Nach dem Empfang von Daten erfolgt die Kommunikationsstapelverarbeitung zumindest soweit, dass die empfangenen Daten als digitale und somit weiter verarbeitbare Werte vorliegen. Im Anschluss daran findet im Rahmen der erfindungsgemäßen Vorverarbeitung in dem Empfangssteuergerät 2 eine Einstufung bzw. Einsortierung der Daten bzw. sendenden Objekte in Referenzklassen statt. Hierfür werden aus den Positionsdaten des sendenden Objekts, die in den Werten der empfangenen Daten enthalten sind, und den Positionsdaten des eigenen Fahrzeugs, die in dem Empfangssteuergerät 2 beispielsweise durch empfangene Signale eines satellitenbasierten Ortungsinformation oder durch ein anderes Modul über ein fahrzeuginternes Kommunikationsnetz bekannt sind, der Abstand zwischen dem eigenen Fahrzeug und dem Objekt bestimmt. Ferner wird über die Geschwindigkeit des eigenen Fahrzeugs und die Geschwindigkeit des Objekts eine mögliche Kollisionszeit bestimmt. Dabei wird aus dem Abstand und den Positionen der Fahrzeuge sowie der beispielsweise durch Übertragung der einzelnen Koordinatenkomponenten der Geschwindigkeit in dem verwendeten Koordinatensystem bekannte Richtung der Geschwindigkeit berücksichtigt.

Liegen der Abstand und die Kollisionszeit unter vorgegebenen Schwellwerten für die erste Relevanzklasse 1 mit der höchsten Relevanz, werden die Daten bzw. Objekte der Relevanzklasse 1 zugewiesen. Liegen der Abstand und die Kollisionszeit über den Schwellwerten für die erste Relevanzklasse 1, aber unter den Schwellwerten für die zweite Relevanzklasse 2, werden die Daten bzw. Objekte der zweiten Relevanzklasse 2 zugewiesen. Übrige Objekte werden der Relevanzklasse 3 mit der niedrigsten Relevanz zugewiesen bzw., falls schon sicher ist, dass sie nicht mehr verwendet werden, bereits hier verworfen.

Die Objekte in der Relevanzklasse 1 werden dann mit höchster Priorität weiter verarbeitet, da diese Objekte gegebenenfalls eine direkte Gefahr für das eigene Fahrzeug darstellen. Die Vorverarbeitung wird für diese Objekte beendet und die Abarbeitung des Kommunikationsstapels abgeschlossen. Dies ist in Fig. 1 durch den Doppelpfeil dargestellt, wobei der Abschluss der Kommunikationsstapelverarbeitung beispielsweise erfindungsgemäß auch eine Prüfung der Datensicherheit bzw. Datenauthentizität beinhalten kann, insbesondere falls notwendig bzw. gefordert.

Anschließend werden diese Daten unmittelbar dem Anwendungsmodul 5 mit einem Fahrerassistenzsystem und/oder einem Fahrsicherheitssystem zugeleitet, welches die Daten geeignet weiterverarbeitet und die notwendigen Maßnahmen einleitet. Zu diesen Maßnahmen kann beispielsweise die Einleitung einer automatischen Bremsung gehören. Da diese Anwendungen des Anwendungsmoduls 5 unmittelbar die Sicherheit des Fahrzeugs betreffen, müssen die Daten dieser Objekte in Steuergeräten mit einem entsprechend hohen Sicherheitslevel (SIL-Level) bearbeitet werden. Diese Daten werden daher nicht einer Prädiktion in der Vorverarbeitung unterzogen, sondern möglichst schnell an die entsprechend sicheren Steuergeräte weiter geleitet.

Der erste Schritt der Vorverarbeitung in der Empfangssteuereinheit 2 beschränkt sich daher auf ein Erkennen der Relevanz der Daten und ein möglichst schnelles Weiterleiten der relevantesten Daten an das endverarbeitende Anwendungsmodul 5, um die geringstmögliche Latenz der Daten dieser relevanten Objekte zu erreichen. Gegebenenfalls kann bei dem Einsortieren von Daten in die Relevanzklasse 1 sogar ein Interrupt in der Kommunikationsstapelverarbeitung erfolgen, damit diese Daten in dem Kommunikationsstapel unmittelbar weiterverarbeitet und schnellstmöglich dem Anwendungsmodul 5 zugeleitet werden können.

Die Objekte in den Relevanzklassen 2 und 3 werden dagegen zunächst in der Vorverarbeitung weiter verarbeitet. Um die Rechenleistung des Empfangssteuergeräts 2 nicht unnötig zu belasten, finden die weiteren Schritte der Vorverarbeitung in dem nachgeschalteten Steuergerät 3 statt.

Die bereits von dem Empfangssteuergerät 2 aufgrund ihres Abstands und/oder ihrer Kollisionszeit in die zweite Relevanzklasse eingestuften Objekte werden dabei unmittelbar der Klasse 2 zugewiesen und wie später beschrieben weiter verarbeitet. Nicht in die zweite Referenzklasse 2 einsortierte Objekte werden dagegen einer weiteren Einstufung in Relevanzklassen unterzogen. Dazu werden zusätzlich die Erfassungsbereiche von Umfeldsensoren des eigenen Fahrzeugs unter Idealbedingungen betrachtet, die in dem Steuergerät 3 als geeignet parametrierte Informationen vorliegen. Objekte, die sich entsprechend ihrer in den Daten enthaltenen Positionsangaben in diesem theoretischen Erfassungsbereich finden, werden zusätzlich in diese Klasse 2 eingestuft.

Im Rahmen einer weiteren Vorverarbeitung in dem Anwendungsmodul 6 kann dann beispielsweise eine Sensorfusion durchgeführt werden, wenn die in der C2X-Kommunikation identifizierten Objekte auch in Umfeldsensoren des Fahrzeugs, beispielsweise einem Radarsensor, erfasst werden. Dadurch werden die in dem Kommunikationssystem 1 des Fahrzeugs bearbeiteten Daten nicht nur qualitativ verbessert, sondern auch in dem Sinne verdichtet, dass verschiedene Informationen zu einem Objekt zusammengeführt werden. Dies erleichtert und beschleunigt die weitere Verarbeitung in nachfolgenden Anwendungen, da die Vielzahl von Einzeldaten reduziert wird.

Ferner kann in dem Anwendungsmodul 6 im Rahmen der erfindungsgemäßen Vorverarbeitung versucht werden, die Positionsgenauigkeit der Daten zu den einzelnen Objekten zu verbessern, indem beispielsweise die Daten mit anderen Daten im Erfassungsbereich verglichen werden und/oder indem eine geeignete Datenfilterung stattfindet. Zusätzlich kann im Rahmen der erfindungsgemäßen Vorverarbeitung eine fahrdynamische Prädiktion unter Berücksichtigung von in dem Anwendungsmodul vorliegenden Karten- und Straßeninformationen und/oder einer Richtungsauswertung der einzelnen erfolgen Objekte bezogen auf das eigene Fahrzeug erfolgen. Dies erlaubt nachfolgenden Sicherheitseinrichtungen ein einfacheres Tracking (zeitliches und räumliches Verfolgen) eines Objekts. Dabei kann auch auf übermittelte Daten, wie beispielsweise eine Krümmung der Bewegungsrichtung und/oder Beschleunigung bzw. Entschleunigung des Objekts, zurückgegriffen werden. Zum Abschluss der Vorverarbeitung in dem Anwendungsmodul 6 und Beendigung der Kommunikationsstapelabarbeitung werden die Daten der Objekte einem Fahrzeug-Anwendungsmodul 7 zur Verfügung gestellt, bei dem es sich beispielsweise auch um ein Fahrerassistenzsystem (welches auch mit dem Fahrerassistenzsystem 5 identisch sein kann) handeln kann. Auch kann das Anwendungsmodul 7 ein Ortungs- und/oder Navigationsmodul oder eine beliebige weitere Anwendung in dem Fahrzeug sein, welche Daten aus der C2X-Kommunikation verwendet.

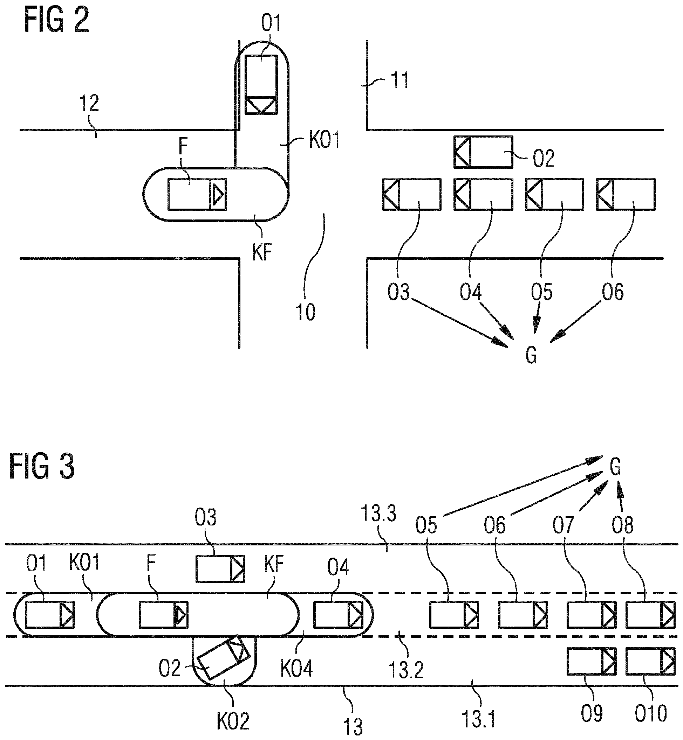

Die Daten und/oder Objekte der Klasse 3 werden schließlich an ein weiteres Steuergerät 4 weitergeleitet, in dem eine weitere und abschließende Vorverarbeitung durch das Anwendungsmodul 8 stattfindet. Dieser letzte Schritt der Vorverarbeitung kann darin bestehen, als völlig irrelevant eingestufte Daten aufzugeben und die Abarbeitung des Kommunikationsstapels für diese Daten abzubrechen, um nicht unnötig Speicher- und Rechenzeitressourcen in den Steuergeräten 2, 3, 4 sowie nachfolgenden Anwendungen zu verbrauchen. Eine weitere Anwendung kann darin liegen, Gruppen von Objekten, zu denen jeweils Daten vorliegen, zusammenzufassen und als ein Objekt zu behandeln, um die Datenmenge zu reduzieren. Anwendungsfälle hierzu wurden bereits erläutert und ergeben sich auch aus den nachfolgend mit Bezug auf die Fig. 2 und 3 beschriebenen Fahrsituationen. Es kann erfindungsgemäß vorgesehen sein, dass für die Objekte der Relevanzklasse 3 keine fahrdynamische Prädiktion oder Sensorfusion durchgeführt wird, weil der Erkenntnisgewinn in der Regel den Rechenaufwand nicht lohnt. Die gewonnen Informationen können, sofern sie nicht verworfen werden, aber durchaus anderen Anwendungen, beispielsweise einer als Infotainment- und Mobilitätsmodul ausgebildeten Anwendungsmodul 9, zugeleitet werden.

Da typischer Weise dauerhaft Daten empfangen werden, die einzelnen Anwendungen jedoch mit einer gewissen Loopzeit auf die Daten zugreifen, müssen die Daten gegebenenfalls in den Steuergeräten 2, 3, 4 oder anderweitigen Speichern zwischengespeichert werden. Hierzu bietet es sich an, die Daten nach Relevanzklassen und gegebenenfalls ergänzenden Prioritäten sortiert, im Übrigen aber chronologisch abzulegen. Gegebenenfalls kann der Zeitunterschied zwischen Empfang und Abfrage mittels einer Kurzzeitprädiktion, bevorzugt durch die nachfolgende Anwendung, ausgeglichen werden.

Das in Fig. 1 beschriebene Kommunikationssystem 1 ist beispielhaft und stellt eine Ausführungsform dar. Die im Zusammenhang mit dieser Ausführungsform beschriebenen Funktionen der einzelnen Komponenten sind nicht auf eine Anordnung der Komponenten in genau dieser Form beschränkt und können auch in abgewandelten Formen, jeweils für sich, als erfindungsgemäßer Beitrag eingesetzt werden.

In Fig. 2 ist eine Verkehrssituation an einer Kreuzung dargestellt. Auf an die Kreuzung 10 anschießenden Straßen 11, 12 befinden sich das eigene Fahrzeug F und andere Fahrzeuge bzw. Objekte O, die in der Darstellung für eine einfache Bezugnahme durchnummeriert sind.

Das eigene Fahrzeug F bewegt sich auf der Straße 12 auf die Kreuzung 10 zu. Der Bewegungsbereich, der innerhalb einer vorgegebenen kurzen Kollisionszeit erreicht wird, ist als Kollisionsbereich KF des eigenen Fahrzeugs schattiert eingezeichnet. Entsprechend bewegt sich das Fahrzeug O1 auf der Straße 11 auf die Kreuzung 10 zu. Der Kollisionsbereich KO1 des Fahrzeugs O1 ist ebenso schattiert eingezeichnet. Da sich diese beiden Bereiche KF und KO1 schneiden, ist die Kollisionszeit zur Einstufung des Objekts in die erste Relevanzklasse 1 unterschritten. Dieses Objekt wird damit in die erste Relevanzklasse 1 eingestuft und dessen Daten unmittelbar an das Anwendungsmodul 5 mit dem Fahrerassistenzsystem weitergeleitet.

Das Fahrzeug O2 bewegt sich auch auf der Straße 12, aber in der Gegenrichtung zu dem eigenen Fahrzeug F, auf die Kreuzung 10 zu. Die hierzu passenden Kollisionsbereiche sind der Übersichtlichkeit halber nicht eingezeichnet. Aufgrund der Bewegung der beiden Fahrzeuge überschneiden sich aber auch diese Kollisionsbereiche innerhalb der für das Einsortieren in die zweite Relevanzklasse gültigen Schwellenwerte. Daher wird das Objekt 2 in die zweite Relevanzklasse einsortiert. Im Rahmen der weiteren Vorverarbeitung in dem Steuergerät 3 wird dann eine fahrdynamische Prädiktion des Objekts O2 versucht. Außerdem wird, wenn das Objekt O2 durch einen Fahrzeug-Umfeldsensor des eigenen Fahrzeugs erfasst wird, eine Sensorfusion durchgeführt. Damit ist ein sicheres Tracking des Objekts O2 möglich. Wenn der Fahrer des eigenen Fahrzeugs F beispielsweise durch ein Blinksignal anzeigt, links in die Straße 11 einbiegen zu wollen, kann vor dem Fahrzeug O2 im Gegenverkehr gewarnt werden.

Die Fahrzeuge O3 bis O6 stehen im Gegenverkehr auf der Straße 12, weil diese links in die Straße 11 abbiegen möchten und das eigene Fahrzeug F zu beachten haben, das bei einer Geradeausfahrt Vorfahrt hätte. Da diese Fahrzeuge O3 bis O6 verkehrsbedingt stehen, überschneiden sich deren Kollisionsbereiche mit dem Kollisionsbereich des eigenen Fahrzeugs F weder für die erste noch für die zweite Relevanzklasse. Auch der Abstand zwischen dem eigenen Fahrzeug F und den Fahrzeugen O3 bis O6 ist so groß, dass diese nicht in die Relevanzklasse 2 einzustufen sind. Daher werden diese Objekte O3 bis O6 in die Relevanzklasse 3 einsortiert.

In der Anwendungseinheit 8 wird dann durch Auswertung und Vergleich der Daten der Objekte O3 bis O6 festgestellt, dass diese Objekte O3 bis O6 gemeinsame Eigenschaften aufweisen. Diese Objekte O3 bis O6 werden daher als Gruppe G zusammengefasst, die in diesem Fall sinnvoller Weise durch das Objekt O3 als dem dem eigenen Fahrzeug nächstkommenden Objekt repräsentiert wird. Durch das Zusammenfassen kann die in dem Kommunikationssystem 1 des Fahrzeugs zu verarbeitende Datenmenge deutlich reduziert werden.

Fig. 3 betrifft eine Verkehrssituation auf einer Autobahn 13, von der nur eine Fahrtrichtung mit den Fahrspuren 13.1, 13.2 und 13.3 dargestellt ist. Das eine Fahrzeug F befindet sich auf der zweiten Fahrspur 13.2. Zu dem eigenen Fahrzeug F ist auch der für die Einstufung in die erste Relevanzklasse maßgebliche Kollisionsbereich KF schattiert dargestellt. Hinter bzw. vor dem eigenen Fahrzeug fahren auf derselben Fahrspur 13.2 die Fahrzeuge O1 und O4, von denen in dem Kommunikationssystem 1 des eigenen Fahrzeugs F auch C2X-Mitteilungen empfangen werden. Deren Kollisionsbereiche KO1 und KO4 sind entsprechend mit eingezeichnet. Auf der Fahrspur 13.1, knapp versetzt vor dem eigenen Fahrzeug F, fährt das Fahrzeug O2, das gerade einen Spurwechsel auf die Fahrspur 13.2 durchführt. Auch für dieses Fahrzeug O2 ist der Kollisionsbereich KO2 mit eingezeichnet.

Da sich die Kollisionsbereiche KO1, KO2 und KO4 mit dem Kollisionsbereich KF des eigenen Fahrzeugs F überschneiden, werden die Objekte O1, O2 und O4 in die Relevanzklasse 1 einsortiert. Das Fahrerassistenzsystem 5 erhält daher erfindungsgemäß besonders schnell Daten der Objekte O1, O2 und O4 und kann den Fahrer so möglichst zeitig über den erkannten und gefährlichen Spurwechsel des Fahrzeugs O2 informieren.

Dies würde grundsätzlich auch für das Objekt O3 gelten, das jedoch nicht an der C2X-Kommunikation teilnimmt und daher in dem erfindungsgemäßen Verfahren nicht berücksichtigt wird.

Die Fahrzeuge O5, O6, O7, O8, O9 und O10 liegen bezogen auf das eigene Fahrzeug F außerhalb des relevanten Abstands und außerhalb der relevanten Kollisionszeit. Daher werden diese Objekte O5 bis O10 in die dritte Relevanzklasse einsortiert. In einer weiteren Vorverarbeitung des Anmeldungsmoduls 8 wird erkannt, dass die Fahrzeuge O9 und O10 auf einer anderen Fahrspur 13.1 fahren. Die Daten dieser Objekte O9 und O10 werden daher als nicht relevant eingestuft und verworfen. Für die Objekte O5 bis 08 wird bei der Vorverarbeitung in dem Anwendungsmodul 8 erkannt, dass diese Fahrzeuge auf derselben Fahrspur 13.2 wie das eigene Fahrzeug in Kolonne fahren. Daher werden diese Fahrzeuge zu einer Gruppe G zusammengefasst und deren Daten durch das Objekt O5 repräsentiert, das dem eigenen Fahrzeug von den Objekten O5, O6, O7, O8 der Gruppe G am nächsten ist.

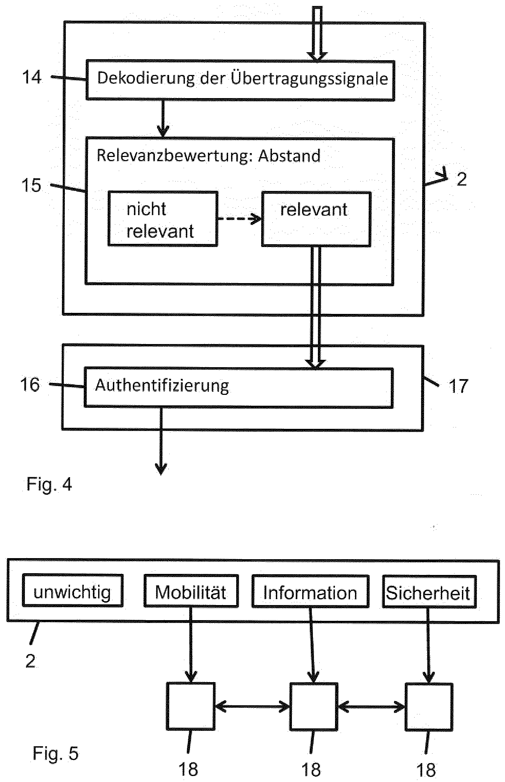

Fig. 4 stellt in einem schematischen Ablaufdiagramm eine weitere Variante der Erfindung in den Vordergrund, die auch mit der unter Bezug auf Fig. 1 beschriebenen Variante verbunden werden kann.

Gemäß Fig. 4 ist vorgesehen, dass nach dem Empfang der Daten über die Antenne und Dekodierung der Übertragungssignale 14 in einem ersten Schritt der Kommunikationsstapelabarbeitung, die durch einen Doppelpfeil dargestellt ist, auch noch in dem in die nicht dargestellte Antenneneinheit integrierten Empfangssteuergerät 2 die empfangen Daten anhand ihres Abstands zu dem eigenen Fahrzeug bewertet werden. Nach dieser Relevanzbewertung 15 werden nur die relevanten Daten in nachfolgenden Steuergeräten weiterbewertet bzw. der Kommunikationsstapel weiter abgearbeitet.

Hierzu ist in Fig. 4 eine Weiterverarbeitung des Kommunikationsstapels durch eine Authentifizierung 16 der empfangenen Daten vorgesehen. Die Sicherheit der Objekte und/oder Daten wird also in einem Securitymodul 17 erst überprüft, wenn sie als relevant für die Fahrzeugsicherheit (bspw. wegen einer möglichen Kollisionsgefahr) oder die Mobilität (beispielsweise wegen eines Hinweises auf einen Stau) bewerten wurden.

Werden die Objekte dagegen nicht als relevant eingestuft, so erhalten sie die Bewertung "Security nicht geprüft" oder werden verworfen. Dieses Vorgehen reduziert den Aufwand deutlich, mit dem die Echtheitsprüfung der Daten normalerweise verbunden ist.

Erst in einem der Authentifizierung 16 nachgeordneten Schritt werden die Daten in Anwendungsmodulen weiter näher geprüft und in hoch relevante, kritische bzw. mittelrelevant, zu beobachtende Daten respektive Objekte einsortiert. Die kritischen Objekte werden wie beschrieben sofort einer entsprechenden Sicherheitsanwendung zugeleitet und die zu beobachtenden Objekte gegebenenfalls für ein Tracking in einem nächsten Verarbeitungsdurchlauf vorgemerkt. Dies ist in Fig. 4 nicht mehr dargestellt.

Schließlich ist es möglich, dass die als nicht relevant eingestuften Daten dennoch in Anwendungsmodulen nachverarbeitet werden, sofern die Bearbeitung keine anderweitig benötigten Ressourcen an Speicherplatz oder Rechenzeit erfordert. Sollten sich bei einer solchen Nachverarbeitung noch nicht authentifizierte Daten als relevant erweisen, werden diese Daten als relevant umklassifiziert und dann der Authentifizierung 16 zugeleitet. Dies ist durch einen gestrichelten Pfeil innerhalb der Relevanzbewertung 15 angedeutet.

Fig. 4 zeigt, wie die Kommunikationsstapelabarbeitung und die erfindungsgemäße Vorverarbeitung der in der C2X-Kommunikation empfangenen Daten miteinander verzahnt sind.

In einem weiteren, gegebenenfalls auch mit den vorherigen Ausführungsbespielen kombinierbaren, Ausführungsbeispiel gemäß Fig. 5 werden die in der C2X-Kommunikation empfangenen Daten direkt auf dem Empfangssteuergerät 2 in Relevanzklassen aufgeteilt bzw. einsortiert, wobei folgende Relevanzklassen-Bezeichnungen vorgesehen sind: "unwichtig", "relevant für Mobilität", "relevant für Information", "relevant für die Sicherheit". Die Daten in der unwichtigen Klasse werden nicht weitergeleitet oder weiterverarbeitet. Die übrigen Daten werden an andere, nachgeordnete Steuergeräte 18 weitergeleitet, wobei gegebenenfalls auch nur ein nachgeordnetes Steuergerät vorgesehen sein kann.

In den nachgeordneten Steuergeräten 18 wird diese Grobklassifikation dazu genutzt die Daten zu validieren. Bei der Validierung kann unter anderem kontrolliert werden, ob die gegenwärtigen Daten der Objekte mit der Historie der Objekte konform sind. Die Validierung der Daten wird dabei so gesteuert, dass sicherheitskritische Objekte aufwendigere Methoden durchlaufen und genauer analysiert werden als mobilitätsrelevante Objekte.

Die Validierung kann auch in verschiedenen Steuergeräten durchgeführt werden, die für die Datenklassen einen entsprechenden Sicherheitslevel (ASI-Level) aufweisen, so dass sicherheitskritische Daten in Steuergeräten bearbeitet werden die eine geringe Ausfallwahrscheinlichkeit aufweisen.

Sofern sich bei der nachfolgenden Bearbeitung die Relevanzbeurteilung der Daten ändert, können die Daten jeweils den entsprechenden Steuergeräten zugeführt werden, wie durch die Doppelpfeile angedeutet.

## Patentansprüche

1. Verfahren zum Empfang von Daten bei der drahtlosen Fahrzeug-zu-Umgebung-Kommunikation in einem Kommunikationssystem (1) eines Fahrzeugs (F) mit mehreren Steuergeräten (2, 3, 4, 18), bei dem ein Empfangs-Steuergerät (2) Daten empfängt und bei dem während des Empfangs ein Kommunikationsstapel abgearbeitet wird, **dadurch gekennzeichnet, dass** die Daten von Objekten (O) aus der Umgebung des Fahrzeugs (F) empfangen werden, wobei die Daten eine Positionsangabe des Objektes (O) enthalten und wobei den empfangenen Daten eines Objektes (O) ein Abstand zwischen dem Objekt (O) und dem Fahrzeug (F) zugeordnet wird,
wobei die empfangenen Daten in zumindest zwei verschiedene Relevanzklassen einsortiert werden, wobei das Einsortieren in die Relevanzklassen anhand des Abstands direkt in dem Empfangs-Steuergerät (2) erfolgt, und
dass die empfangenen Daten abhängig von der Relevanzklasse in dem Kommunikationsstapel auf unterschiedlichen Steuergeräten (3, 4, 4, 18) weiterverarbeitet werden.

2. Verfahren nach Anspruch 1, wobei einer Relevanzklassen jeweils eine Priorität zugeordnet wird, wobei Daten mit einer kurzen Kollisionszeit eine hohe Priorität zugeordnet wird, und wobei die weitere Bearbeitung der Daten in dem Kommunikationsstapels von dieser Priorität abhängig ist.

3. Verfahren nach einem der vorhergehenden Ansprüche, wobei die empfangenen Daten je nach Relevanzklasse unterschiedlichen Anwendungen zugeordnet werden.

4. Verfahren nach einem der vorhergehenden Ansprüche, wobei den empfangen Daten eines Objektes (O) eine Kollisionszeit zugeordnet wird und wobei das Einsortieren in die Relevanzklassen anhand der Kollisionszeit erfolgt.

5. Verfahren nach einem der vorhergehenden Ansprüche, wobei das Einsortieren der empfangenen Daten von Objekten (O) anhand der Überdeckung mit dem Empfangsbereich eines oder mehrerer Umfeldsensoren des Fahrzeugs (F) erfolgt.

6. Verfahren nach einem der vorgehenden Ansprüche, wobei die Qualität der empfangenen Daten durch die Daten eines anderen Objektes (O) oder eines Sensors verbessert wird.

7. Verfahren nach einem der vorgehenden Ansprüche, wobei eine fahrdynamische Prädiktion eines an der Fahr-zeug-zu-Umgebung-Kommunikation teilnehmenden Objekts (O) durchgeführt wird.

8. Verfahren nach einem der vorgehenden Ansprüche, wobei aus Daten eines Objektes (O) eine Trajektorie des Objektes (O) ermittelt wird und diese Trajektorie extrapoliert wird.

9. Verfahren nach einem der vorhergehenden Ansprüche, wobei Daten von Objekten (O) zu Gruppen (G) zusammengefasst werden.

10. Verfahren nach Anspruch 9, wobei eine Gruppe (G) durch das Objekt (O) mit der niedrigsten Kollisionszeit und/oder mit dem geringsten Abstand zu dem eigenen Fahrzeug (F) repräsentiert wird.

11. Verfahren nach einem der vorhergehenden Ansprüche, wobei drei Relevanzklassen gebildet werden.

12. Kommunikationssystem zum Empfang von Daten in der drahtlosen Fahrzeug-zu-Umgebung-Kommunikation zwischen einzelnen Kommunikationsteilnehmern, wobei das Kommunikationssystem (1) in einem Fahrzeug (F) vorgesehen ist und verschiedene Steuergeräte (2, 3, 4, 18) mit einer Recheneinheit aufweist, **dadurch gekennzeichnet, dass** die Recheneinheit der Steuergeräte (2, 3, 4, 18) zur Durchführung des Verfahrens nach einem der Ansprüche 1 bis 11 eingerichtet ist.

13. Computerprogrammprodukt mit Programmcode-Mitteln, die auf einem computerlesbaren Datenträger gespeichert sind, um das Verfahren nach einem der Ansprüche 1 bis 11 durchzuführen, wenn das Programmprodukt auf einer Recheneinheit ausgeführt wird.

## Claims

1. Method for data reception in wireless vehicle-to-surroundings communication in a communication system (1) of a vehicle (F) with a plurality of control devices (2, 3, 4, 18), in which a receiving control device (2) receives data and in which, during the reception, a communication stack is processed, **characterized in that** the data are received from objects (O) from the surroundings of the vehicle (F), wherein the data contain a position indication of the object (O), and wherein a distance between the object (O) and the vehicle (F) is allocated to the received data of an object (O), wherein the received data are sorted into at least two different classes of relevance, wherein the sorting into the classes of relevance is carried out on the basis of the distance directly in the receiving control device (2), and the received data are further processed in the communication stack on different control devices (3, 4, 4, 18) depending on the class of relevance.

2. Method according to Claim 1, wherein a priority is allocated in each case to a class of relevance, wherein a high priority is allocated to data with a short time-to-collision, and wherein the further processing of the data in the communication stack is dependent on this priority.

3. Method according to one of the preceding claims, wherein the received data are allocated to different applications according to the class of relevance.

4. Method according to one of the preceding claims, wherein a time-to-collision is allocated to the received data of an object (O), and wherein the sorting into the classes of relevance is carried out on the basis of the time-to-collision.

5. Method according to one of the preceding claims, wherein the sorting of the received data of objects (O) is carried out on the basis of the overlap with the coverage area of one or more environment sensors of the vehicle (F).

6. Method according to one of the preceding claims, wherein the quality of the received data is improved by the data of a different object (O) or of a sensor.

7. Method according to one of the preceding claims, wherein a dynamic prediction of an object (O) participating in the vehicle-to-surroundings communication is carried out.

8. Method according to one of the preceding claims, wherein, from data of an object (O), a trajectory of the object (O) is determined and this trajectory is extrapolated.

9. Method according to one of the preceding claims, wherein data of objects (O) are combined into groups (G) .

10. Method according to Claim 9, wherein a group (G) is represented by the object (O) with the lowest time-to-collision and/or with the shortest distance to the own vehicle (F).

11. Method according to one of the preceding claims, wherein three classes of relevance are formed.

12. Communication system for data reception in wireless vehicle-to-surroundings communication between individual communication participants, wherein the communication system (1) is provided in a vehicle (F) and has different control devices (2, 3, 4, 18) with a computing unit, **characterized in that** the computing unit of the control devices (2, 3, 4, 18) is configured to carry out the method according to one of Claims 1 to 11.

13. Computer program product with program code means which are stored on a computer-readable data medium in order to carry out the method according to one of Claims 1 to 11, if the program product is run on a computing unit.

## Revendications

1. Procédé pour la réception de données lors d'une communication sans fil véhicule à environnement dans un système de communication (1) d'un véhicule (F) ayant plusieurs appareils de commande (2, 3, 4, 18), dans lequel un appareil de commande de réception (2) reçoit des données, et dans lequel une pile de communication est traitée durant la réception, **caractérisé en ce que** les données d'objets (O) sont reçues en provenance de l'environnement du véhicule (F), dans lequel les données contiennent une indication de position de l'objet (O) et dans lequel une distance entre l'objet (O) et le véhicule (F) est associée aux données d'un objet (O) ayant été reçues,
dans lequel les données reçues sont triées en au moins deux classes de pertinence différentes, dans lequel le tri en classes de pertinence est effectué directement dans l'appareil de commande de réception (2) sur la base de la distance, et
**en ce que** les données reçues sont soumises à un post-traitement sur des appareils de commande (3, 4, 18) différents en fonction de la classe de pertinence dans la pile de communication.

2. Procédé selon la revendication 1, dans lequel une priorité respective est associée à une classe de pertinence, dans lequel une priorité élevée est associée à des données ayant un temps de collision court, et dans lequel le post-traitement des données dans la pile de communication dépend de cette priorité.

3. Procédé selon l'une quelconque des revendications précédentes, dans lequel les données reçues sont associées à des applications différentes en fonction de la classe de pertinence.

4. Procédé selon l'une quelconque des revendications précédentes, dans lequel un temps de collision est associé aux données d'un objet (O) ayant été reçues et dans lequel le tri en classes de pertinence est effectué sur la base du temps de collision.

5. Procédé selon l'une quelconque des revendications précédentes, dans lequel le tri des données d'objets (O) ayant été reçues est effectué sur la base du chevauchement avec la plage de réception d'un ou de plusieurs capteurs d'environnement du véhicule (F).

6. Procédé selon l'une quelconque des revendications précédentes, dans lequel la qualité des données reçues est améliorée par les données d'un autre objet (O) ou d'un capteur.

7. Procédé selon l'une quelconque des revendications précédentes, dans lequel une prédiction de la dynamique de conduite d'un objet (O) participant à la communication véhicule à environnement est effectuée.

8. Procédé selon l'une quelconque des revendications précédentes, dans lequel une trajectoire d'un objet (O) est déterminée à partir de données de l'objet (O) et cette trajectoire est extrapolée.

9. Procédé selon l'une quelconque des revendications précédentes, dans lequel des données d'objets (O) sont combinées en groupes (G).

10. Procédé selon la revendication 9, dans lequel un groupe (G) est représenté par l'objet (O) ayant le temps de collision le plus faible et/ou ayant la distance la plus faible par rapport au véhicule lui-même (F).

11. Procédé selon l'une quelconque des revendications précédentes, dans lequel trois classes de pertinence sont créées.

12. Système de communication pour la réception de données lors d'une communication sans fil véhicule à environnement entre des participants individuels à la communication, dans lequel le système de communication (1) est prévu dans un véhicule (F) et comprend des appareils de commande (2, 3, 4, 18) différents dotés d'une unité de calcul, **caractérisé en ce que** l'unité de calcul des appareils de commande (2, 3, 4, 18) est conçue pour mettre en œuvre le procédé selon l'une quelconque des revendications 1 à 11.

13. Produit de programme informatique comprenant des moyens à code de programme stockés sur un support de données lisible par ordinateur pour mettre en œuvre le procédé selon l'une quelconque des revendications 1 à 11 lorsque le produit de programme est exécuté sur une unité de calcul.
